Europäisches Patentamt

European Patent Office

Office européen des brevets

(11) Publication number: **0 147 508**
**A1**

(12) # EUROPEAN PATENT APPLICATION

(21) Application number: **84106238.3**

(22) Date of filing: **30.05.84**

(51) Int. Cl.⁴: **F 16 D 69/02**

(30) Priority: **28.12.83 JP 245272/83**

(43) Date of publication of application:
**10.07.85 Bulletin 85/28**

(84) Designated Contracting States:
**BE DE FR**

(71) Applicant: **KABUSHIKI KAISHA KOMATSU
SEISAKUSHO
3-6, 2-chome Akasaka
Minato-ku Tokyo 107(JP)**

(72) Inventor: **Yamashita, Masao
1925, Shimo-sakunobe Takatsu-ku
Kawasaki-shi Kanagawa-ken(JP)**

(72) Inventor: **Kibayashi, Yasutada
505, 1-11-8, Nakamachi
Machida-shi Tokyo(JP)**

(72) Inventor: **Miyahara, Yutaka
c/o KOMATSU SEISAKUSHO 18, Manda
Hiratsuka-shi Kanagawa-ken(JP)**

(72) Inventor: **Shibata, Akira
140-3, Matoi
Hiratsuka-shi Kanagawa-ken(JP)**

(74) Representative: **Patentanwälte TER MEER - MÜLLER -
STEINMEISTER
Mauerkircherstrasse 45
D-8000 München 80(DE)**

(54) **Wet friction material.**

(57) A wet friction material for use in brake and clutch plates of a large sized construction vehicle which possesses porosity in the range of 2 to 85 %, preferably 9 to 72 %. The material is formed by preparing a matrix of heat-resistant fibers in the form of felt, impregnating said matrix with heat-resistant resin capable of acquiring, on curing, a smaller modulus of compressive elasticity than the fibers, and thereafter curing the impregnant in the resultant composite.

EP 0 147 508 A1

Croydon Printing Company Ltd

WET FRICTION MATERIAL

BACKGROUND OF THE INVENTION

Field of the Invention:

This invention relates to a wet friction material.

Description of Prior Art:

The wet friction material for use in the construction equipment, for example, has been urged to possess an increasingly large capacity for energy absorption owing to the recent inclination of the construction equipment toward growth in size. In the case of the friction disk which is similarly inclined toward increase in size, the desirability of the friction disk exerting uniform pressure throughout its entire surface upon the opposite plate and, consequently, avoiding generation of heat spots in the interface of friction has been finding recognition as an important requirement for the purpose of enabling the friction disk as a whole to acquire an increased capacity for energy absorption.

To meet this requirement, the wet friction material must possess low elasticity. In this respect, a metallic material is considered to be more practicable than an organic material. Generally, however, the organic material has the disadvantage that it is inferior to the metallic material in thermal resistance and thermal conductivity.

For the material to acquire a high capacity for energy absorption, it is an indispensable requirement that the material should be at least resistant to heat. In the

- 1 -

0147508

extreme condition of friction, since the lubricating oil is heated to elevated temperatures and is consequently vaporized, it is generally held that the temperature of the friction material basically will not be suffered to exceed the boiling point of the material (about 250° to 300°C). Thus, the level of the order of about 250° to 300°C is taken as one criterion of the threshold temperature of the thermal resistance of the material. Among the existing high performance organic wet friction materials are counted fluorine rubber friction material [Published Unexamined Japanese Patent Application (OPI) SHO 52(1977)-18749] and graphite type friction material using as its binder a copolymer of nitrile rubber and epoxy resin [OPI SHO 54(1979)-66950]. The component substances used in these wet friction materials have threshold heat-resistant temperatures invariably exceeding about 250°C.

Another disadvantage which stands on the way to practical use of the organic material is the high possibility of this material sustaining serious damage as soon as the supply of lubricating oil decreases, if locally. This is chiefly because the organic material is inferior, as already pointed out above, to the metallic material in terms of thermal resistance and thermal conductivity. As possible measures for the elimination of this difficulty, such ideas as

(1) incorporating a solid lubricant like graphite or $MoS_2$ directly into the frictional material to impart a self-lubricating property thereto, and

(2) increasing the porosity of the friction material

- 2 -

to preclude the possibility of the supply of lubricating oil running short
are readily conceived by persons of ordinary skill in the
art. The incorporation of the solid lubricant would not be
quite effective, however, if the amount of the solid lubricant
so incorporated is small. If the amount is large, then the
friction material would suffer a substantial sacrifice of its
strength. Particularly in the case of the transmission clutch
for a bulldozer, for example, the loss of strength of the
friction material could be so heavy as to entail the possibility of the friction material sustaining fracture while in
service. As concerns the measure resorting to the increase
of the porosity, most if not all molded materials by nature
would not easily permit ample increase of porosity.

Among other wet friction materials, the paperlike
material has found popular acceptance because it is less
expensive and enjoys a higher coefficient of friction. In
spite of these merits, it suffers from the following demerits:

a) It wears notably under heavy load.

b) It has its coefficient of friction sharply
lowered with increasing surface pressure.

The inventors studied the aforementioned merits and
demerits of paperlike material from various angles and arrived
at a conclusion that all the demerits of the paperlike material
originate in the low thermal resistance of paper fibers
(cellulose) forming the matrix of the material. They also
drew an inference that the aforementioned merits of the

- 3 -

paperlike material substantially originate in the high porosity of the order of 15 to 70 % peculiar to paper and that any improvement in the thermal resistance of the cellulose as the backbone has absolutely no possibility of impairing the aforementioned merits.

The results of the study have led the inventors to a knowledge that a material of high porosity having a matrix of such fibers as possess a critical temperature of thermal resistance at least in the range of about 250° to 300°C ought to exhibit high performance enough to overcome all the aforementioned demerits of the paperlike material.

The inventors also examined various kinds of fibers each having a superior heat resisting property in place of cellulose of the paperlike material. However, they did not find any fiber of fabril state produced in accordance with a papermaking process. Almost fibers had a mere pole state by which the papermaking was difficult. Though it is possible to make a paperlike material by combining those fibers and cellulose, such a paperlike material does not have a superior property as a wet friction material, because the cellulose has a low heat resisting property. Even if a paperlike material were obtained from such a fiber alone as having a pole state, the paperlike material did not have a high porosity and a low elasticity. In consideration of those circumstances, the inventors paid attention their interests to these heat-resistant fibers in the form of felt, so that they invented their desired wet friction materials by impregnating the felt state fibers with heat-resistant resin as a binder, and thereafter curing the impregnant.

## SUMMARY OF THE INVENTION

This invention has been perfected for the purpose of overcoming the various defects suffered by the wet friction materials of prior art. It is, therefore, aimed at providing a wet friction material which possesses sufficient porosity, exhibits an outstanding self-lubricating property without requiring addition of a solid lubricant, and enjoys a high capacity for energy absorption.

After a diligent study continued in search of fibers satisfying the aforementioned requirement, the inventors have found that a wet friction material having porosity of 2 to 85 % and obtained by forming a matrix of heat-resistant fibers incapable of melting and liable to carbonize at elevated temperatures, impregnating this matrix with a heat-resistant resin capable of acquiring a lower coefficient of friction on curing than the aforementioned fibers, and curing the resultant wet composite fulfils the object of this invention.

The nature of this invention, including the foregoing and other objects and novel features, will be more fully appreciated from the following detailed description of the illustrative embodiments of the invention, taken in conjunction with the accompanying drawings.

## BRIEF DESCRIPTION OF THE DRAWINGS

Figure is a schematic explanatory diagram illustrating the condition of a frictional part of a wet friction material of the present invention.

## DESCRIPTION OF THE PREFERRED EMBODIMENTS

Now, the technical idea which underlies the wet friction material of the present invention will be described below.

The basic configuration of the wet friction material of this invention resides in impregnating a mass of fibers 1 intertwined as illustrated in Figure with a binder 2 and molding the resultant composite mass in a prescribed shape under mild pressure so as to impart high porosity to the product. In the case of the friction material of this configuration, if the fibers 1 have greater rigidity than the binder 2, it is considered that the fibers will bear the greater part of the load exerted upon the friction material during the contact of this material with the opposite plate A. As a natural consequence, the ends of the fibers exposed to the interface of friction will be heated to elevated temperatures. When the matrix of the friction material is formed of heat-resistant fibers capable of rather readily carbonizing at elevated temperatures under pressure, the end faces of the fibers 1 which abut the opposite plate A as illustrated produce graphite 3. This is equivalent to a statement that the portion of the friction material in the frontmost surface of friction exposed to the extreme reach of pressure always form solid lubricant sufficiently. These heat-resistant fibers, accordingly, give rise to a literally ideal friction material, as evinced by the highly desirable results of the experiments which will be described afterward in working examples. Reference numeral 4 denotes pores.

To be specific, the friction material of this invention is obtained by using, as the fibrous substance for its matrix, heat-resistant fibers incapable of melting and liable to carbonize at elevated temperatures and, as the binder, a heat-resistant resin capable of acquiring, on curing, a lower modulus of elasticity than the aforementioned fibers. When this friction material is put to use, therefore, it induces the aforementioned phenomenon and acquires an outstanding self-lubricating property without requiring addition of solid lubricant and enjoys a very high capacity for energy absorption. Since the basic configuration of this friction material resides in impregnating a mass of interwined fibers with a binder of a relatively low modulus of elasticity and curing the resultant composite, the friction material possesses sufficient porosity and retains sufficient elasticity.

Of the component materials for the friction material of this invention, the fibers liable to carbonize at elevated temperatures are preferably flame-retardant fibers. Typical examples of such fibers are Novoloid fibers (phenol resin fibers) and acrylonitrile fibers treated to acquire flame retardancy. These organic fibers may be used in the form of non-woven or woven fabric. Otherwise, the fibers are desired to be non-metallic fibers in due consideration of their incapability of adhering to the opposite plate during friction. Typical examples of such fibers include ceramic fibers of

$Al_2O_3$ and $SiO_2$, glass fibers, carbon fibers, and Aramides fibers. These fibers may be used in the form of non-woven or woven fabric.

Examples of the binder of a relatively low modulus of elasticity to be used for binding the aforementioned fibers are heat-resistant adhesive agents such as nitrile phenolic and nitrile epoxy and heat-resistant rubbers such as acrylic rubber and fluorine rubber. Optionally, this binder may incorporate a friction adjusting agent in the form of finely divided particles for the purpose of stabilizing the coefficient of friction and improving the (coefficient of static friction)/(coefficient of kinetic friction) value.

The porosity of the wet friction material is required to fall in the range of 2 to 85 %, preferably 9 to 72 %. If the porosity is less than 2 %, the friction material defies smooth infiltration of lubricating oil and suffers from insufficient supply of lubricating oil. If the porosity exceeds 85 %, the friction material acquires insufficient strength and fails to serve advantageously as a friction material.

The wet friction material of this invention by nature is liable to contain therein, partly internally and partly externally, a small amount of extraneous matter such as sand, oil, and paint. The presence of this extraneous matter hardly impairs the effect of the friction material of this invention.

Now, this invention will be described more specifically below with reference to working examples.

Example 1:

As a fibrous material excellent in thermal resist-ance and capable of relatively easy carbonization, non-woven fabric of Novoloid fibers was used. As a binder for the fibers, a nitrile phenolic adhesive agent (copolymer of nitrile rubber and phenol resin) having a lower modulus of elasticity than the fibers and excelling in thermal resistance was used.

A doughnut-shaped piece was cut out of non-woven fabric (about 2 mm in thickness) of Novoloid fibers about 20 µ in diameter, immersed for about 10 seconds in a nitrile phenolic adhesive agent diluted with methylethyl ketone, removed from the adhesive solution, left standing for 10 minutes in the air at room temperature, and then dried at 80°C for one hour. The dry piece was placed on a core plate (S43C material) and heated at 190°C for 75 minutes under pressure of 0.1 kg/cm$^2$ exerted by a weight to cure the adhesive agent.

After the piece had been cured, the frictional surface of the hardened fabric was polished by grinding, cut to form radially spiral grooves therein, and subjected to friction test. The frictional property was rated by the short-time friction test using a constant slippage tester. The test conditions were as shown in Table 1.

Table 1  Conditions of short-time friction test
by the use of a constant slippage tester

| Type | Single disk | Kind of lubricating oil | Engine oil SAE #30 |
|---|---|---|---|
| Opposite plate | S43C, $H_{RC}$ 35 | Amount of oil $(cc/cm^2 \cdot min)$ | 4 |
| Apparent area of friction $(cm^2)$ | 50 | Oil temperature $(°C)$ | 80 |
| Maximum speed of friction (m/sec) | 18 | Total energy absorbed per 1 $cm^2$ of apparent area of friction, Q $(kg \cdot m/cm^2)$ $(Q = \int \mu PVdt)$ | 10 to 30 |
| Friction time per cycle  (sec) | 1.0 | | |
| Cycle time (sec) (engaging cycle) | 10 | | |

For comparison, a typical paper friction material available in the market was subjected to the same test under entirely the same conditions.

The maximum capacity of a given material for energy absorption was evaluated, as generally practiced, by the $Q\dot{Q}$ value which is the product of the total energy absorbed per unit area of friction ($Q = \int \mu PVdt$) during the course of engagement multiplied by the maximum $\mu PV$ value ($\dot{Q}$ value). In the constant slippage test, since the time of friction per cycle, t, was 1.0 sec., the total energy Q was calculated as follows:

$$Q \equiv \int \mu PVdt = \overline{\mu PV}t = \overline{\mu PV} \text{ (average } \mu PV \text{ value)}$$

The results of the test were as shown in Table 2.

0147508

Table 2   Results of constant slippage test      . . . . .

| Material tested | Pattern of grooves | Coarseness of opposite plate | Limit QQ value $(kg^2-m^2/cm^4 sec)$ | Coefficient of kinetic friction |
|---|---|---|---|---|
| Material obtained by Example 1 | Radially | 0.4S lap | 1081 | 0.209 |
| Paper material from market | Half waffle | Same as above | 132 | 0.188 |

It is noted from the foregoing table that the limit $Q\dot{Q}$ value of the commercially available paper material was 132 and that of the material of this invention was as high as 1081. This fact clearly indicates that the capacity for energy absorption possessed by the material of this invention was quite large as compared with that possessed by the ordinary paper material. The coefficient of kinetic friction possessed by the commercially available paper material was 0.188 and that possessed by the material of this invention was 0.209, indicating that there existed no marked difference.

Before and after this test, electroconductivity of each of the test piece was tested between two points separated by a distance of about 2 mm on the surface of friction. Unlike a high conduction of electricity found before the test, only a feeble conduction of electricity was observed after the test. This difference is considered to imply that formation of carbon occurred on the surface of friction during the test.

At the limit, the material of this invention induced an abrupt increase of wear and showed no discernible change

- 11 -

in the coefficient of friction, whereas the paper material induced an abnormal fall of the coefficient of friction and an abrupt increase of wear.

Comparative Experiment 1:

The procedure of Example 1 was repeated, except that non-woven fabric of the aforementioned Novoloid fibers was applied in its unmodified form to a core plate. Since this material had remarkably large porosity, no grooves were cut therein.

During the friction test, this material showed an abrupt increase of wear and reached the limit at $Q\dot{Q} = 98$. This poor maximum capacity for energy absorption may be explained by a postulate that since this material contained absolutely no substance of low elasticity, the fabric was crushed and deprived wholly of its elasticity to induce formation of heat spots when the surface pressure rose to a certain level. The coefficient of kinetic friction was 0.196.

Example 2:

The same material as used in Example 1 was tested for performance on an inertia type clutch tester. The test piece for the test was prepared by faithfully following the procedure of Example 1. Grooves were formed in a full waffle pattern involving pitches of 8 mm. For comparison, the same commercially available paper material (with grooves formed in a half waffle pattern) was tested under the same conditions. The test conditions were as shown in Table 3.

Table 3  Conditions of clutch test

| Type | Multi-layer (two) | Kind of lubricating oil | Engine oil SAE #30 |
|---|---|---|---|
| Coarseness of opposite plate | 3-6S (polished) | Amount of oil $(cc/cm^2 \cdot min)$ | 8 |
| Apparent area of friction $(cm^2)$ | 113 | Oil temperature (°C) | 80 |
| Maximum speed of friction (m/sec) | 40 | | |
| Time of friction per cycle (sec) | 0.7 | $Q = \int \mu PVdt$ $(kg \cdot m/cm^2)$ | 9.5 |
| Cycle time (sec) | 20 | | |

In the clutch test, 500 engagements were made under a varying set of load conditions.  In other words, the load was stepped up after each total of 500 engagements until the limit.  The results of this test were as shown in Table 4.

Table 4  Results of clutch test

| Material tested | Pattern of grooves | Coarseness of opposite plate | Limit $Q\dot{Q}$ value $(kg^2m^2/cm^4sec)$ | Coefficient of static friction | Coefficient of kinetic friction |
|---|---|---|---|---|---|
| Material obtained by Example 2 | Full waffle | 3-6S (polished) | >962 | 0.148 | 0.156 |
| Paper material from market | Half waffle | Same as above | 240 | 0.156 | 0.161 |

In the test, the commercially available paper material showed a heavy fall of the coefficient of friction and reached its limit at the $Q\dot{Q}$ value of 240, whereas the material of this invention showed absolutely no adverse effect

- 13 -

even at the $Q\dot{Q}$ value of 962.

The coefficient of kinetic friction and the efficient of static friction were 0.148 and 0.156 for the material of this invention and 0.156 and 0.161 for the paper material, indicating that there was no marked difference.

The limit $Q\dot{Q}$ value found in the clutch test was higher than that found in the constant slippage test because the cycle time was longer and the amount of lubricant oil used was larger in the former test.

Example 3:

As a fibrous substance to form the matrix, non-woven fabric of $Al_2O_3$ and $SiO_2$ fibers excelling in thermal resistance was used. The fibers had a diameter of about 3 µ.

As a binder for the fibers, a nitrile phenolic adhesive agent (copolymer of nitrile rubber and phenol resin) having a lower modulus of elasticity than the fibers was used.

A doughnut-shaped piece was cut out of the aforementioned non-woven fabric about 2 mm in thickness, immersed for about 10 seconds in a nitrile phenolic adhesive agent diluted with methylethyl ketone, removed from the adhesive solution, left standing for 10 minutes in the air at room temperature, and then dried at 80°C for one hour. The dry piece was placed on a core plate (S43C material) and heated at 190°C for 75 minutes under pressure of 0.1 kg/cm$^2$ exerted by a weight to cure the adhesive agent.

After the piece had been cured, the frictional surface of the hardened fabric was polished by grinding, cut to form grooves after the pattern of a grating (full waffle) - involving pitches of 6 mm, and subjected to friction test. The frictional property was rated by the short-time friction test using a constant slippage tester. The test conditions and the method for evaluation of the total capacity for energy absorption were identical to those used in Example 1.

The limit $Q\dot{Q}$ value of the material of this invention was 980, a value notably high as compared with the limit value of 132 found for the commercially available paper material. After 400 engagements, the material retained on the frictional surface the scars from the polishing. The thickness lost by wearing was found to be not more than 10 $\mu$. This means that the resistance to wear shown by this material was at least about 10 times that shown by the conventional paper material.

Under the conditions of 5 kg/cm$^2$ of surface pressure and 15 to 20 m/sec of speed of friction, the coefficient of kinetic friction shown by this material was 0.204.

Example 4:

A fibrous substance to form the matrix, a binder and the procedure were all the same as in Example 3. But, a wet friction material having porosity of 72 % was resulted.

Example 5:

The procedure of Example 3 was repeated, except that non-woven fabric of Alamides fibers having a diameter of about 10 $\mu$ was used as a fibrous substance to form the

matrix.

When the Q$\dot{Q}$ value reached 698, this material failed to retain a stable coefficient of friction and reached its limit.

After 400 engagements, it retained on its frictional surface the scars from the polishing. The thickness lost by wearing was found to be not more than 15 µ.

The coefficient of kinetic friction measured under the same conditions was 0.210.

Example 6:

The procedure of Example 3 was repeated, except that non-woven fabric of carbon fibers 15 to 20 µ in diameter was used as a fibrous substance to form the matrix. This fabric was obtained by firing non-woven fabric of Novoloid fibers in an inactive atmosphere. The fibers were in vitreous (amorphous) texture.

When the Q$\dot{Q}$ value reached 1534, the adhesive agent in the matrix was embrittled and the material as a whole collapsed.

This material showed unusually high resistance to wear. The thickness lost by wearing was too small to be measured. The coefficient of kinetic friction, under the same conditions, was found to be 0.202.

The outstanding capacity for energy absorption exhibited by this material may be ascribable to the high thermal condictivity of the carbon fibers forming the matrix.

Example 7:

- 16 -

The proceudre of Example 3 was repeated, except that a total of five superposed paperlike sheets (about 0.2 mm in thickness) of crystalline carbon fibers produced from acryl resin. The fibers had a diameter of about 10 μ.

After the QQ̇ value reached 929, this material failed to show stable coefficient of friction.

After 400 engagements, the material retained on the frictional surface the scars from the polishing. The thickness lost by wearing was found to be not more than 20 μ.

The coefficient of kinetic friction, tested under the same conditions, was 0.150.

Example 8:

Pyrex glass fibers (made by Corning Glass of the U.S.A.) having a diameter of about 10 μ were used as a fibrous substance to form the matrix.

The glass fibers were immersed in water, scooped up, placed on a flat plate, and thoroughly beaten with a wire brush to form a felt of uniform thickness. The falt was dried at 125°C for one hour. A doughnut-shaped piece was cut out of this dried felt. It was then treated and tested by following the procedure of Example 3.

When the QQ̇ value reached 792, this material failed to show a stable coefficient of friction and induced a sharp increase of wear. Even after 400 engagements, this material retained on its frictional surface the scars from the polishing. The thickness lost by wearing was found to be only about 15 μ. The coefficient of kinetic friction, under the same conditions, was found to be 0.169.

The results of friction test applied on the wet friction materials obtained by the foregoing Examples 3 to 8 were as shown in Table 5 including a comparative Example.

The foregoing working examples testify that high-porosity friction materials produced in accordance with this invention by using fibers having heat-resistant temperatures exceeding about 250° to 300°C and permitting relatively easy carbonization and a binder having a lower modulus of elasticity than the fibers exhibit unusually high capacities for energy absorption.

Table 5 Results of friction test

| Material tested | Porosity (%) | Pattern of groove | Coarseness of opposite plate | Limit $Q\dot{Q}$ value $(kg^2m^2/cm^4 \cdot sec)$ | Relative ratio of anti-friction property | Coefficient of kinetic friction |
|---|---|---|---|---|---|---|
| Material obtained by Example 3 | 56 | Full waffle | 0.4S lap | 908 | $\geq 10$ | 0.204 |
| Material obtained by Example 4 | 72 | Full waffle | ditto | 892 | $\geq 8$ | 0.221 |
| Paper material from market | 61 | Half waffle | ditto | 132 | 1 | 0.188 |
| Material obtained by Example 5 | 34 | Full waffle | ditto | 698 | $\geq 8$ | 0.210 |
| Material obtained by Example 6 | 63 | Full waffle | ditto | 1534 | $\gg 10$ | 0.202 |
| Material obtained by Example 7 | 9 | Full waffle | ditto | 929 | $\geq 6$ | 0.150 |
| Material obtained by Example 8 | 48 | Full waffle | ditto | 792 | $\geq 8$ | 0.169 |

WHAT IS CLAIMED IS:

1.      A wet friction material possessing porosity in the range of 2 to 85 %, preferably 9 to 72 %, and formed by preparing a matrix of heat-resistant fibers in the form of felt, impregnating said matrix with heat-resistant resin capable of acquiring, on curing, a smaller modulus of compressive elasticity than said fibers, and curing the impregnant in the resultant composite.

2.      A wet friction material according to Claim 1, wherein said matrix of heat-resistant fibers is capable of melting and liable to carbonize at elevated temperature.

3.      A wet friction material according to Claim 2, wherein said matrix of heat-resistant fibers is non-woven or woven fabric of Novoloid fibers (flame-retardant fibers of phenol resin).

4.      . A wet friction material according to Claim 2, wherein said matrix of heat-resistant fibers is non-woven or woven fabric of acrylonitrile fibers treated in advance to acquire flame retardancy.

5.      A wet friction material according to Claim 1, wherein said matrix of heat-resistant fibers is non-woven or woven fabric of non-metallic inorganic heat-resistant fibers or Alamides fibers.

6.      A wet friction material according to Claim 5, wherein said non-metallic inorganic heat-resistant fibers are ceramic fibers or glass fibers.

7.      A wet friction material according to Claim 1,

0147508

wherein said heat-resistant resin in cured state is a copolymer of nitrile rubber and phenol resin.

8. A wet friction material according to Claim 1, wherein said heat-resistant resin in cured state is a copolymer of nitrile rubber and epoxy resin.

1/1

**European Patent Office**

# EUROPEAN SEARCH REPORT

| | DOCUMENTS CONSIDERED TO BE RELEVANT | | EP 84106238.3 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | DE - A1 -3 132 969 (BORG-WARNER CORP.)<br><br>* Claims 2,3; page 9, lines 23-27 *<br><br>-- | 6,7 | F 16 D 69/02 |
| A | EP - A1 - 0 000 840 (FERODO LIMITED)<br><br>* Totality *<br><br>-- | | |
| A | EP - A1 - 0 000 841 (FERODO LIMITED)<br><br>* Totality *<br><br>-- | | |
| A | EP - A1 - 0 050 377 (RÜTGERSWERKE AG)<br><br>* Totality *<br><br>---- | | **TECHNICAL FIELDS SEARCHED (Int Cl 4)**<br><br>F 16 D 69/00<br>F 16 D 69/02 |

The present search report has been drawn up for all claims

| Place of search | Date of completion of the search | Examiner |
|---|---|---|
| VIENNA | 08-03-1985 | KAMMERER |

CATEGORY OF CITED DOCUMENTS

X : particularly relevant if taken alone
Y : particularly relevant if combined with another document of the same category
A : technological background
O : non-written disclosure
P : intermediate document

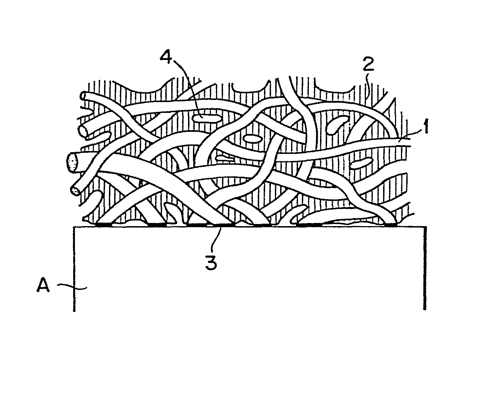

T : theory or principle underlying the invention
E : earlier patent document, but published on, or after the filing date
D : document cited in the application
L : document cited for other reasons
& : member of the same patent family, corresponding document

EPO Form 1503 03 82